# EUROPEAN PATENT SPECIFICATION

(11) **EP 2 635 064 B1**
(45) Date of publication and mention of the grant of the patent: **26.07.2017**
(21) Application number: 12360012.4
(22) Date of filing: 29.02.2012
(51) Int. Cl.: H04W 24/02

(54) **Communication control**
Kommunikationssteuerung
Contrôle de communication

(43) Date of publication of application: 04.09.2013
(73) Proprietor: ALCATEL LUCENT, 92100 Boulogne-Billancourt (FR)
(72) Inventor: Claussen, Holger, Straffan Co Kildare (IE); Kucera, Stepan, Castleknock 15 Dublin (IE)
(74) Representative: Sarup, David Alexander

(56) References cited:
- US-A1- 2009 225 712
- US-A1- 2010 130 222

## Description

### FIELD OF THE INVENTION

The present invention relates to a method of adapting operational radio communication parameters of a small cell base station operating to support a small cell within a wireless communication network, and a computer program product and small cell base station operable to perform that method.

### BACKGROUND

Wireless telecommunication networks are known. In a cellular system, radio coverage is provided by regions of geographical area. Those regions are typically known as cells. A base station is located in each cell to provide radio coverage. Traditional base stations provide coverage in relatively large geographical areas and such cells are often referred to as macro cells. It is possible to provide smaller sized cells within a macro cell. Cells that are smaller than macro cells are generically known as small cells, but may be referred to as micro cells, pico cells or femto cells. One way to establish a small cell is to provide a small cell base station which provides coverage having a relatively limited range within the coverage area or overlapping with the coverage area of a macro cell. The transmission power of small cells is typically low and, thus, each small cell may provide a small coverage area compared to that of a macro cell. Given increased demand for wireless multimedia services, wireless networks are experiencing a strong growth in wireless data traffic.

The deployment of small cells is an effective method to increase achievable data rates within a given radio spectrum resource. However, such small cells offer an expensive means to provide a full geographical area of coverage, particularly in areas with low user demand. Network architectures are therefore moving towards hierarchical cell structures where macro cells for area coverage are complemented with small cells to provide increased capacity where required.

The deployment of macro cells is typically optimized by a network provider when planning a large scale wireless communication network. Such deployment is typically implemented to provide near continuous coverage in a geographical area forming a network. Small cells are typically user deployed in an ad-hoc manner and may cover traffic hotspots or macro cell coverage holes. Typically, small cells may be deployed in regions which overlap with macro cells.

Radio frequency spectrum available for cellular networks is limited and expensive. The spectrum used for macro cells is also used for small cells. Whilst this results in increased interference within a network, such co-channel deployments typically allow high spectral efficiencies to be achieved compared to separate channel deployments.

Co-channel deployments may result in users travelling through a small cell. Fast moving users may drop calls as they move through a coverage area of a co-channel small cell. In essence, fast moving users passing through the coverage area of a co-channel small cell may be unable to complete a hard handover process typically managed within a network when a user passes between coverage areas provided by different base stations or within cells supported by a single base station in the time available. By the time a network is in a position to have completed all steps necessary to complete a handover to the small cell from a macro cell, a fast moving user may have passed through the region of coverage supported by a small cell base station and the signal to interference and noise ratio of a pilot channel of the small cell base station may have dropped to a level at which communication can no longer successfully take place with a user and, thus, a call is dropped.

It will be understood that under fast mobility conditions, inter-tier handovers from a macro cell layer to a small cell layer may be undesirable due, in part, to a non-negligible duration of handover procedures as a result of which, calls may be dropped.

US 2009/0225712 discloses a system where detection of the macro cell user equipment is done in response to a RUM signal that is transmitted by that equipment indicating that a particular frequency it wishes to use is suffering interference and requesting priority for that frequency. Thus, rather than detecting passively the location of a macro cell user equipment any such detection is in response to a RUM request.

US 2010/0130222 discloses a femto cell base station that detects interference on an uplink frequency and if it exceeds a certain level stops transmitting on the downlink of that frequency band or in some cases reduces the power of any transmissions. In the case of stopping the transmissions, pilot transmissions are powered down and active calls connected to the femto cell base station are handed over to the macro cell.

Accordingly, it is desired to improve the operation of a multi-tier wireless network.

### SUMMARY

A first aspect provides a method of adapting operational radio communication parameters of a small cell base station operating to support a small cell which overlaps a coverage area supported by a macro cell base station, the method comprising: receiving an indication of entry into the small cell of macro cell user equipment communicating with the macro cell base station by detecting an increase in interference in a sub-band of a common radio communication spectrum, said detected increase meeting predetermined threshold criteria indicative of macro cell user equipment entry into said small cell; and if so, adapting the operational radio communication parameters of the small cell base station to move communications between the small cell base station and small cell user equipment away from a sub-band of a shared region of radio communication spectrum common to the small cell base station and the macro cell base station; wherein said adapting comprises: determining the sub-band of the shared region of radio communication spectrum common to the small cell base station and the macro cell base station which the macro cell user equipment is using for communication with the macro cell base station and moving any communications between the small cell base station and small cell user equipment away from the determined sub-band to a further sub-band of the shared region of radio communication spectrum common to the small cell base station and the macro cell base station.

The first aspect recognises that small cells may operate to limit their own effect upon the operation of users connected to a macro cell. In particular, the first aspect recognises that small cells operating in a co-channel scenario may operate in an altruistic manner, ensuring that the performance of macro cells is not affected whilst potentially sacrificing their own performance. The first aspect may allow the prevention of call drops which may be experienced by macro cell users when moving through the coverage area of a small cell in a co-channel scenario.

Aspects and embodiments require no inter-tier feedback. The first aspect recognises that inter-tier interference may be mitigated if small cell base stations operate in an altruistic manner and that by mitigating such inter-tier interference, network capacity may be enhanced and tier co-existence optimized.

The indication of entry of macro cell user equipment to a region of coverage provided by the small cell comprises an indirect or passive indication of entry. That indication does not comprise direct signalling, or hard handover signalling, but relate to parameters directly measurable by a small cell base station, those parameters being indicative of active macro cell user equipment operating in the vicinity of the small cell base station. In this way, the small cell base station becomes aware of the proximity of macro cell user equipment earlier than may be possible if explicit network signalling is relied upon as a trigger.

The adapting comprises: moving communications between the small cell base station and small cell user equipment to a sub-band of a shared region of radio communication spectrum common to the small cell base station and the macro cell base station of communications between the small cell base station and small cell user equipment. Accordingly, communications may be moved away from one portion of shared radio spectrum towards another portion of shared radio spectrum, thus reducing usage of a first portion of radio spectrum by small cell operation and freeing that portion for operation of macrocell user equipment communications.

In one embodiment, the moving of communication away from a sub band of shared spectrum may occur in relation to small cell downlink communications. In one embodiment, the moving of communication away from a sub band of shared spectrum may occur in relation to small cell uplink communications. In one embodiment, the moving of communication away from a sub band of shared spectrum may occur in relation to both small cell downlink and uplink communications.

In one embodiment, the adapting comprises: clearing a sub-band of a shared region of radio communication spectrum common to the small cell base station and the macro cell base station of communications between the small cell base station and small cell user equipment. Accordingly, a portion of shared spectrum may be cleared of all communications within the small cell in relation to communications between small cell user equipment and small cell base station, thus reducing usage of a first portion of radio spectrum by small cell operation and freeing that portion for operation of macrocell user equipment communications.

In one embodiment, the adapting comprises initiation of transfer of small cell user equipment to an adjacent small cell. Accordingly, communications within a small cell may be transferred to an adjacent cell, such that macro cell communications are minimally disrupted.

The adapting comprises: determining a sub-band of the shared region of radio communication spectrum common to the small cell base station and the macro cell base station which the macro cell user equipment is using for communication with the macro cell base station, and moving communications between the small cell base station and small cell user equipment away from the determined sub-band. Accordingly, communications within the small cell may be moved away from a region in which it is determined communications within the macro cell are occurring. In such a way, operation of the macrocell and its users is minimally disrupted.

In one embodiment, determining comprises: monitoring interference experienced in the shared region of radio communication spectrum common to the small cell base station and the macro cell base station and assessing whether the monitored interference meets predetermined threshold criteria indicative of macro cell user equipment communications with the macro base station occurring on one or more sub-bands of the shared region of radio communication spectrum. Accordingly, the interference in uplink or downlink shared spectrum may be used as an indicator of active macrocell user equipment entry into a region proximate to a small cell base station.

In one embodiment, the monitoring comprises: directly measuring interference experienced by the small cell base station in said shared common radio communication spectrum.

In one embodiment, the adapting comprises instructing small cell user equipment to move uplink communications to the small cell base station away from a sub-band of a shared region of radio communication spectrum common to the small cell base station and the macro cell base station. In one embodiment, the adapting comprises moving downlink transmissions to small cell user equipment away from a sub-band of a shared region of radio communication spectrum common to the small cell base station and the macro cell base station. Accordingly, uplink, downlink either or both communications may be adjusted in the small cell to accommodate communication in the macrocell.

In one embodiment, the small cell user equipment is operable to perform a method according to the first aspect until communication with the macrocell user equipment is specifically handed over to the small cell. It will be appreciated that the method may be implemented for all macrocell users entering a region of coverage supported by a small cell base station, not only fast moving macrocell users. When explicit handover signalling is received at the small cell base station, or when macrocell user equipment leaves its vicinity the small cell base station may be operable to resume normal communication with small cell users, rather than maintain a region of shared spectrum as being less used. The exit of macrocell user equipment from a region supported by the small cell base station may be determined by monitoring for a drop in interference experienced by the small cell base station.

Receiving an indication of entry into the small cell of macro cell user equipment communicating the said macro cell base station comprises: detecting an increase in interference in a sub-band of the common radio communication spectrum, the detected increase meeting predetermined threshold criteria indicative of macro cell user equipment entry into the small cell. In some embodiments, the thresholds and parameters relating to interference monitoring may be such that only fast moving macrocell user equipment trigger an indication of entry and the consequent small cell base station actions.

A second aspect provides a computer program product operable, when executed on a computer, to perform the method of the first aspect.

A third aspect provides a small cell base station operable to adapt operational radio communication parameters, the small cell base station being operable to support a small cell which overlaps a coverage area supported by a macro cell base station, the small cell base station comprising: reception logic operable to receive an indication of entry into the small cell of macro cell user equipment communicating with the macro cell base station by detecting an increase in interference in a sub-band of said common radio communication spectrum, the detected increase meeting predetermined threshold criteria indicative of macro cell user equipment entry into the small cell; and adaptation logic operable to adapt the operational radio communication parameters of the small cell base station to move communications between the small cell base station and small cell user equipment away from a sub-band of a shared region of radio communication spectrum common to the small cell base station and the macro cell base station to a further sub-band of the shared region of radio communication spectrum common to the small cell base station and the macro cell base station.

In one embodiment, the indication of entry comprises an indirect indication of entry.

In one embodiment, the adaptation logic is operable to move communications between the small cell base station and small cell user equipment to a sub-band of a shared region of radio communication spectrum common to the small cell base station and the macro cell base station of communications between the small cell base station and small cell user equipment.

In one embodiment, the adaptation logic is operable to clear a sub-band of a shared region of radio communication spectrum common to the small cell base station and the macro cell base station of communications between the small cell base station and small cell user equipment.

In one embodiment, the adaptation logic is operable to initiate transfer of small cell user equipment to an adjacent small cell.

The adaptation logic is operable to determine a sub-band of the shared region of radio communication spectrum common to the small cell base station and the macro cell base station which the macro cell user equipment is using for communication with the macro cell base station, and move communications between the small cell base station and small cell user equipment away from the determined sub-band.

In one embodiment, the determining comprises: monitoring interference experienced in the shared region of radio communication spectrum common to the small cell base station and the macro cell base station and assessing whether the monitored interference meets predetermined threshold criteria indicative of macro cell user equipment communications with the macro base station occurring on one or more sub-bands of the shared region of radio communication spectrum.

In one embodiment, the monitoring comprises: directly measuring interference experienced by the small cell base station in the shared common radio communication spectrum.

In one embodiment, the adaptation logic is operable to instruct small cell user equipment to move uplink communications to the small cell base station away from a sub-band of a shared region of radio communication spectrum common to the small cell base station and the macro cell base station.

In one embodiment, the adaptation logic is operable to move downlink transmissions to small cell user equipment away from a sub-band of a shared region of radio communication spectrum common to the small cell base station and the macro cell base station.

The reception logic is operable to receiving an indication of entry into the small cell of macro cell user equipment communicating with the macro cell base station by detecting an increase in interference in a sub-band of the common radio communication spectrum, the detected increase meeting predetermined threshold criteria indicative of macro cell user equipment entry into the small cell.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further with reference to the accompanying drawings, in which:
Figure 1 illustrates the main components of a telecommunications network according to one embodiment;
Figure 2 illustrates a general deployment within one macro cell shown in Figure 1;
Figure 3 illustrates schematically a two-tier network with a mobile macro cell user; and
Figures 4a and 4b illustrate schematically methods according to aspects.

### DESCRIPTION OF THE EMBODIMENTS

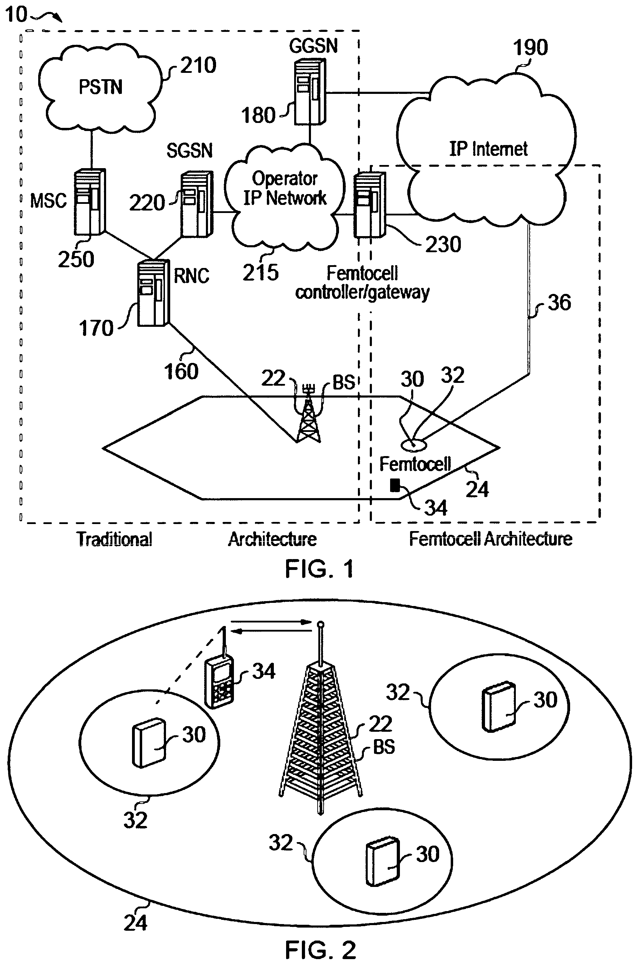

Figure 1 illustrates a wireless communication network, generally 10, according to one embodiment. User equipment 34 roam through the wireless communication network 10. Base stations 22 are provided which support respective macro cells 24. A number of such base stations are provided, which are distributed geographically in order to provide a wide area of coverage to the user equipment 34. When user equipment 34 is within a macro cell 24 supported by the base station 22 then communications may be established between the user equipment 34 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. It will be appreciated that Figure 1 illustrates a small subset of the total number of user equipment and base stations that may be present in a typical communications system.

The operation of a cluster of base stations is managed by a radio network controller 170. The radio network controller 170 controls the operation of the wireless communications network 10 by communicating with the base stations 22 over a backhaul communications link 160. The network controller 170 also communicates with the user equipment 34 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates via an operator IP network 215 with serving general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided a number of small cell base stations, in this case, femto cell base stations 30 (sometimes referred to as home base stations), each of which provides a femto cell 32 (or home cell) in the vicinity of a building within which the associated femto cell base station is installed. The femto cells 32 provide local communications coverage for a user in the vicinity of those buildings. Each femto cell base station 30 communicates with the network 10 via a femto cell controller/gateway 230. A handover or camping event is initiated between the base station 22 and the femto cell base stations 30 when the user equipment 34 provides a measurement report to the macro base station 22 which indicates that a femto base station 30 is within range. The femto cell base stations 30 typically utilise the user's broadband Internet connection 36 (such as ADSL, Cable, Ethernet, etc.) as a backhaul.

Femto cell base stations 30 are lower-power, low-cost, user-deployed base stations that provide a high cellular quality of service in residential or enterprise environment these femto base stations can provide the functionality of RNCs, SGSNs, GGSNs and MSCs. In contrast to current macro cell approaches where complex and highly reliable base stations are deployed to strategic locations decided by the network owner, the femto cell base stations 30 are provided locally by customers. Such femto cell base stations 30 provide local coverage in areas of the macro network where quality of service may be low. Hence, the femto cell base stations 30 provide for improved quality of service in areas which are difficult for network operators. To reduce the cost of the femto base stations 30 and to reduce complexity and interference effects of the femto cell 32 on other user equipment within the macro cell, the transmission power of the femto cell base station 30 is relatively low in order to restrict the size of the femto cell 32 to a range of tens of metres or less. The femto cell base stations 30 have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

Each femto base station 30 will typically have functionality to control which user equipment 34 may access to that femto base station 30. A closed access femto base station will only allow access to those user equipment who have been indicated (for example using the user equipment's International Mobile Subscriber Identity (IMSI)) as being registered with that femto base station, whereas an open access femto base station allows access to all user equipment.

Before describing embodiments in any detail, a brief overview will now be provided. When performing a handover within a wireless network, to a small base station or any other base station, various signalling must be passed between a serving macro base station and the receiving cell base station within the network. Such signalling typically takes time and, in the case of fast moving user equipment entering a small cell, the handover process may not be complete by the time user equipment exits a coverage area supported by a small cell base station.

Aspects recognise that existing functionality of user equipment, macro base stations, and intervening infrastructure is utilised on deployment of plug-and-play small cell base stations. Straight re-use of existing procedures and functionality causes operational disruption to a network. For example, the passage of active user equipment through the coverage area of a small cell base station is likely to cause significant interference to operation of the small cell. That is to say, the active macro cell user equipment causes significant interference in the uplink to operation of the small cell and the presence of the small cell causes significant interference in the downlink macro cell when it comes to communication with user equipment.

It has been recognised that multi-tier networks may solve the issue of mobility and inter-tier interference by dedicating non-overlapping frequency bands to each tier. Although technically simple and viable, such an approach may reduce the capacity of a macro cell tier and reduce spectral efficiency in the small cell tier. Thus, co-channel solutions characterised by full frequency re-use are more preferable. That is to say, both small cell and macro cell transmissions are preferably accommodated within the same frequency bands.

In a non-overlap solution, depending on the network architecture and, in particular, in the case of LTE or 4G deployments, feedback between macro cells and small cells (for example, by using the X2 interface in LTE) can be used to flexibly coordinate allocation of non-overlapping radio resources to each tier. That is to say, sub-carriers of overlapping frequency are generally deployed and the network operates to manage both tiers in frequency and time, in order to prevent transmission outages and dropped calls and to mitigate interference. Such an approach may allow re-use of parts of a macro cell spectrum locally for small cells. However, such an approach is typically implemented on a vendor by vendor case and the X2 interface is not standardised. As a result, incompatibility issues may result. Furthermore, such an approach can require significant signalling for the required feedback information and the computational complexity of optimization is great. Even in single vendor networks, the delay in message passing, as well as the sheer combinatorial complexity of coordinated scheduling, may degrade the applicability and effectiveness of such a feedback centric solution.

Aspects described herein result in a small cell base station acting in an altruistic manner to ensure that its operation disrupts the operation of a macro cell base station or the macro tier as little as possible. Aspects take advantage and utilise particular properties of existing macro cell networks. In particular, current standard implementations of radio resource allocation employ a so-called "greedy" approach. Active users, typically sorted by priority, are assigned to parts of bandwidth in which the perceived signal to noise and interference ratio is the highest. It will also be appreciated that the uplink transmit powers of mobile macro cell users are typically quite high when passing in to a coverage area of a small cell and, thus, resulting interference caused by macro cell user equipment is easy to detect at small cells and distinguish from background or ambient interference.

According to aspects and embodiments described, a small cell base station may be operable to measure a monitorable small cell parameter, for example, uplink interference, in order to detect the existence of macro cell users within the small cell. In some embodiments, parameters may be set such that a small cell base station is operable to recognise a fast moving macro cell user within the small cell. If a macro cell user is detected, the small base station may be operable to temporarily avoid any transmission over a preselected portion of available frequency bandwidth on either, or both, uplink and the downlink spectrum.

According to some embodiments, the small cell base station may be operable to increase transmission powers in surrounding or remaining parts of the downlink bandwidth. If necessary, according to some embodiments, a small base station may allocate less resource to ongoing transmissions in different parts of the spectrum. Transmissions made by a small base station may also be muted or handed over to neighbouring small cells independent on the particular embodiment employed.

According to some embodiments, the small cell base station is operable to vacate uplink and/or downlink bandwidth portions which are determined to be occupied by user equipment operating in connection with a macro cell; that is to say, that mobile macro cell user. In such cases, an uplink bandwidth portion to be vacated may be determined directly on the basis of measured uplink interference. The appropriate downlink bandwidth of a macro cell user equipment may not be explicitly determined at a small base station, but, according to some embodiments, a small base station may be operable to estimate, based upon reports received from its user equipment, the portion of downlink bandwidth being used by a macro cell user in the vicinity of the small base station. Those measurements made by user equipment connected to the small base station may, for example, be reported downlink signal to interference and noise ratios. If a downlink band used by a macro cell user is correctly estimated by a small base station, it will be appreciated that orthogonality between a macro cell and small cell transmission can be established and thus allow a macro cell user to move through a small cell coverage area without the danger of transmission outage or the likelihood of a call drop.

If the downlink band is not estimated correctly by a small base station and an arbitrary portion of downlink bandwidth is vacated, the mobile macro cell user will report an improved channel quality within the vacated frequency spectrum to its serving macro base station. As a result, the greedy resource allocator of the serving macro cell base station is operable to use the vacated frequency spectrum for communications with the macro cell mobile user. As a result, orthogonality between macro cell and small cell transmissions may be established. That orthogonality may allow mobile users to pass through the small cell with minimised risk of an outage or dropped call.

According to some embodiments, a small base station may be operable to inform surrounding small cells of its temporary resource reservation policy. Those surrounding small cells may also adopt the same temporary resource reservation policy, thus clearing space for a macro cell mobile user. It will be appreciated that shared single vendor feedback is thus used.

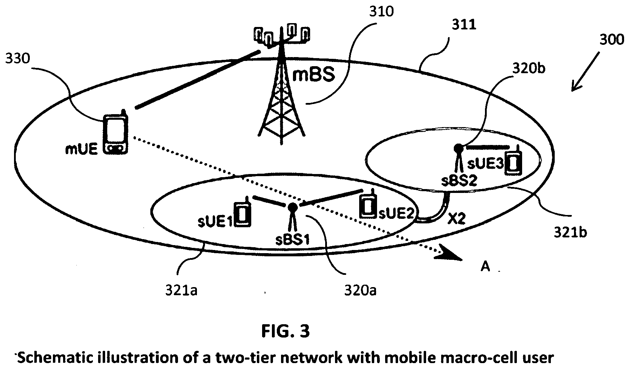

Figure 3 illustrates schematically a two-tier network with a mobile macro cell user according to one embodiment. In the example of Figure 3 there is provided a wireless network 300 operating according to a 4G (LTE) network protocol. The network shown in Figure 3 comprises generally a macro base station (mBS) 310 and two small cell base stations (SBS1, SBS2, 320a and 320b). Macro base station 310 supports an area of coverage 311. Small base station 1 320a supports an area of coverage 321 a and small base station 2 supports an area of coverage 321 b. User equipment mUE 330 is in communication with macro base station 310. User equipment sUE1 and sUE2 are in communication with small base station 320a. User equipment sUE3 is in the coverage area of small base station 2 (SBS2) and in communication with that small base station.

As shown by arrow A in Figure 3, macro user equipment 330 moves from within the coverage area of macro base station 310 towards the coverage area supported by small base station 1 (SBS1).

Small cell base stations SBS1 and SBS2 are operable to continuously monitor interference levels experienced in uplink frequencies including bands shared with macro cells. In particular, they directly measure: (i) the absolute received interference power in sections of the frequency bandwidth which are not used for uplink transmissions by small cell users. In the case of SBS1, those small cell users would be sUE1 and sUE2; (ii)the signal to noise and interference ratio (SINR) in sections of frequency bandwidth which are used for uplink transmissions by small cell users. In the case of SBS1, those users are sUE1 and sUE2.

The detection by a small cell base station of strong interference or low SINR for a period longer than a channel coherence interval is likely to indicate the presence of a mobile macro cell user (in the case of Figure 3, mUE 330) in the vicinity of the small cell base station. Detection thresholds implemented at the small base station are calculated on the basis of macro user equipment transmit power required for standard voice data uplink transmission. The macro user equipment to macro base station path loss is assumed to be equal to the macro base station to small base station path loss. The detection threshold is then calculated in dBm by subtracting the path loss between the small base station and its cell edge from the calculated macro user equipment power to make an estimate of the received power. An additional safety margin may be added. According to come embodiments, over time, the detection threshold can be refined on the basis of observed values of uplink interference caused by slow moving user equipment connected to the macro base station. For example, it may be possible for the small cell base station to note minimum interference value observed before the macro cell user equipment is handed over to the small cell base station. That minimum interference value may be corrected by an additive safety margin and used as a detection threshold.

It will be appreciated that, according to some embodiments, a gradual increase in uplink interference may be used to confirm correctness of detection. It is possible to use the slope of interference increase or the rate of interference increase to estimate the speed of the user equipment attached to the macro base station. According to other embodiments, the small cell base station may detect a mobile macro cell user by receiving a handover request from the macro base station at the small cell base station. in such a case, the macro cell user equipment is typically operable to perform a random access request over a contention-free random access channel.

If a small base station detects macro cell connected user equipment, it is operable to unilaterally temporarily avoid any transmission over a preselected portion of available frequency bandwidth. That transmission may be both on the uplink or the downlink. Contiguous blocks of reserve frequency resources may be implemented according to some embodiments.

In respect of the uplink bands, the size and location of reserved frequency resources may be configured such that they correspond to the size and location of the resources used by a macro cell connected user equipment; that is to say, the parts of the spectrum on which high interference has been detected by the small cell base station.

In respect of downlink transmissions, the frequency resources used by macro cell user equipment may only be estimated, since the small cell base station is not itself operable to distinguish transmissions to that macro cell user equipment from transmissions to other macro cell user equipment further away. However, a small cell base station may be operable to determine the likely size and location of downlink frequency resources being used by a macro cell user equipment in its own coverage area by comparing the channel quality indicator reports of its own users (for example, sUE1, sUE2). In particular, it is advantageous for the small cell base station to look at the channel quality reports being received from those user equipment close to the macro cell user equipment.

In any case, it will be appreciated that according to some embodiments a perfect estimation of the downlink resource being used by the macro base station to contact user equipment mUE is unnecessary. A perfect estimation may be beneficial in the short term. However, in accordance with standardized greedy filling procedures implemented on the downlink, if a macro base station receives an indication of improved channel quality (high channel quality indicator) within the downlink frequency spectrum, then it is operable to move its own downlink transmissions to that space. Thus, if a small cell base station is operable to move its own downlink transmissions to user equipment away from a section of downlink spectrum, that portion of the downlink spectrum is likely to appear more available to the macro base station and, thus, macro base station downlink communication is likely to be moved to that channel. That is to say, without the need for any explicit inter-tier feedback signalling, a greedy macro base station scheduler typically operates to prioritise an empty part of the spectrum for communications with mobile users and, thus, automatically schedules downlink transmissions to the vacated spectrum in order to maximise the downlink signal to interference and noise ratio experienced by a macro cell user equipment, mUE. Thus, it can be seen that according to some embodiments, reserved downlink resources can be determined simply as a multiple of vacated uplink resources for given scaling factors in an arbitrary position.

If the uplink or downlink spectrum which is determined to be advantageously vacated is currently occupied by active transmissions occurring within the small cell, those transmissions may be, according to some embodiments, relocated by the small cell base station to different parts of the uplink or downlink spectrum. If no free spectrum is available it is possible, according to some embodiments, for the small cell base station to move cell edge transmissions such that they are handed over to neighbouring small cells. In some embodiments, some transmissions may be temporarily suspended. Such transmissions may be low priority, with no guarantee in relation to data rate or latency, for example. Small cells which are operable to offload their users to neighbouring cells may temporarily alter cell-specific information broadcast over primary or secondary broadcast channels and may be operable to adapt their pilot signal strengths such that idle users in their coverage areas are not suddenly made to request service.

It will be understood that unilateral actions of a small cell base station establish orthogonality between macro base station and small cell base station transmissions. Such measures implemented by the small cell base station may allow the macro cell user equipment to move through the small cell coverage area without the danger of inter-tier interference affecting downlink macro user equipment transmissions and small cell user equipment transmissions.

According to some embodiments, in order to prevent further inter-tier interference to macro cell user equipment, a small cell base station (in this case, SBS1) may be operable to inform a neighbouring small cell SBS2 about the presence of macro cell user equipment mUE. In particular, according to some embodiments, the small cell base station may be operable to inform adjacent or neighbouring small cell base stations of the location and size of reserved uplink or downlink frequency resources. That is to say, measures implemented at one small cell base station may be implemented in neighbouring or adjacent small cell base stations. That information may be shared between small cell base stations via a small cell gateway or using a single vendor protocol over an X2 interface. In such a way, the macro cell user equipment resource allocation does not need to be updated when travelling through a group of small cells, which is advantageous in the case of semi persistent scheduling by a macro cell base station.

The reservation of frequency resource for a macro user equipment within a small cell may be terminated when the small cell base station determines that uplink power measurements or interference measurements have returned to below the predetermined threshold for a predetermined time period. That time period and threshold may be selected on the basis of levels expected when macro cell user equipment UE is out of interference reach in relation to a small cell.

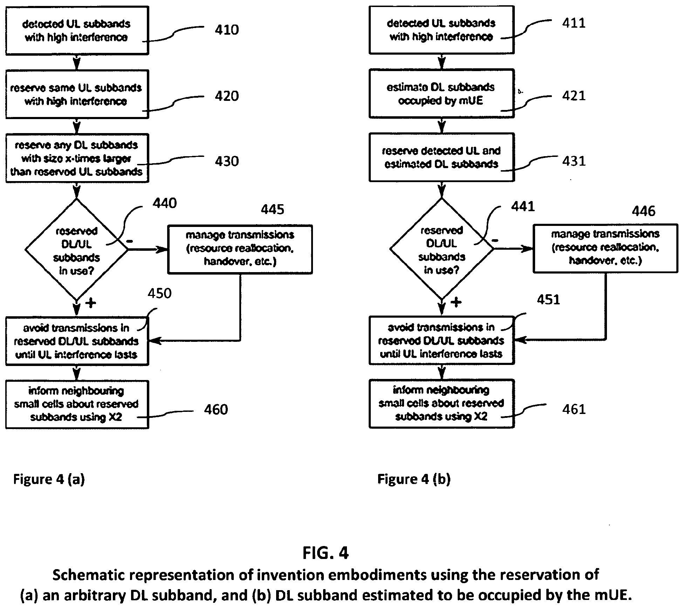

Figures 4a and 4b illustrate schematically method steps implemented at a small cell base station according to some embodiments. In the method illustrated schematically in Figure 4a, a small base station is operable at stage 410 to detect uplink sub bands experiencing high interference. It is then operable to reserve those same uplink sub bands experiencing high interference at step 420. It is also operable to reserve corresponding downlink sub bands typically having a size X times larger than the reserved uplink sub bands at step 430. At step 440 the small cell base station is operable to determine whether those reserved downlink or uplink sub bands are currently in use for communication with user equipment operating within a small cell. If they are not determined to be in use, then the small cell base station is simply operable to avoid making transmissions in the reserved uplink and downlink sub bands whilst the uplink interference persists. That step is illustrated as step 450. If the reserved downlink or uplink sub bands are in use, the small cell base station is operable at step 445 to manage transmissions it is itself responsible for, by reallocating resource or handing over as appropriate. In some embodiments, the small cell base station is operable at step 460 to inform neighbouring small cells about the reserved sub bands in both the uplink and downlink. That informing process may occur using an X2 interface.

In the method illustrated schematically in Figure 4b, whilst the small cell base station is operable to detect uplink sub bands with high interference at step 411, it is also operable to estimate downlink sub bands occupied by a macro cell user equipment at step 421, rather than simply choosing any downlink sub bands. Steps 431 to 461 then mirror those steps taken in Figure 4a, steps 430 to 460.

Aspects allow deployment of small cells in macro cell networks, those small cells not necessarily belonging to the same network operator as the macro cells. Thus, deployment of small cells may not impact on call drop rate within a mobile macro cell network. In other words, the altruistic operation of small cells, according to aspects, may allow coexistence of a small cell tier with a macro cell tier. However, inclusion of small cells within the network may directly enhance overall network capacity. Aspects are now the increase of frequency reuse to 1 if no macro cell user equipment is nearby. In LTE systems, deployment of aspects may maintain frequency reuse to close to 1 depending on traffic conditions.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adapting operational radio communication parameters of a small cell base station (30, 320a, 320b) operating to support a small cell (32, 321a, 321b) which overlaps a coverage area (22, 311) supported by a macro cell base station (24, 310), said method comprising:
receiving an indication of entry into said small cell of macro cell user equipment communicating with said macro cell base station by detecting an increase in interference in a sub-band of a common radio communication spectrum, said detected increase meeting predetermined threshold criteria indicative of macro cell user equipment entry into said small cell; and if so,
adapting said operational radio communication parameters of said small cell base station to move communications between said small cell base station and small cell user equipment away from a sub-band of a shared region of radio communication spectrum common to said small cell base station and said macro cell base station;
wherein said adapting comprises:
determining said sub-band of said shared region of radio communication spectrum common to said small cell base station and said macro cell base station which said macro cell user equipment is using for communication with said macro cell base station and moving any communications between said small cell base station and small cell user equipment away from said determined sub-band to a further sub-band of said shared region of radio communication spectrum common to said small cell base station and said macro cell base station.

2. A method according to any preceding claim, wherein said adapting comprises: clearing a sub-band of a shared region of radio communication spectrum common to said small cell base station and said macro cell base station of communications between said small cell base station and small cell user equipment.

3. A method according to any preceding claim, wherein said adapting comprises determining whether said further sub-band is currently free and if not initiating transfer of small cell user equipment to an adjacent small cell.

4. A method according to any preceding claim further comprising: monitoring interference experienced in said shared region of radio communication spectrum common to said small cell base station and said macro cell base station and assessing whether said monitored interference meets predetermined threshold criteria indicative of macro cell user equipment communications with said macro base station occurring on one or more sub-bands of said shared region of radio communication spectrum.

5. A method according to claim 4, wherein said monitoring comprises: directly measuring interference experienced by said small cell base station in said shared common radio communication spectrum.

6. A method according to claim 4 or claim 5, wherein said monitoring comprises:
monitoring received reports of radio condition experienced from small cell user equipment operating in said small cell.

7. A method according to any preceding claim, wherein said adapting comprises moving low priority communications between said small cell base station and small cell user equipment to a sub-band of a shared region of radio communication spectrum common to said small cell base station and said macro cell base station of communications between said small cell base station and small cell user equipment.

8. A method according to any preceding claim, wherein said adapting comprises instructing small cell user equipment to move uplink communications to said small cell base station away from a sub-band of a shared region of radio communication spectrum common to said small cell base station and said macro cell base station.

9. A method according to any preceding claim, wherein said adapting comprises moving downlink transmissions to small cell user equipment away from a sub-band of a shared region of radio communication spectrum common to said small cell base station and said macro cell base station.

10. A computer program product operable, when executed on a computer, to perform the method of any one of claims 1 to 9.

11. A small cell base station operable to adapt operational radio communication parameters, said small cell base station being operable to support a small cell which overlaps a coverage area supported by a macro cell base station, said small cell base station comprising:
reception logic operable to receive an indication of entry into said small cell of macro cell user equipment communicating with said macro cell base station by detecting an increase in interference in a sub-band of a common radio communication spectrum, said detected increase meeting predetermined threshold criteria indicative of macro cell user equipment entry into said small cell; and
adaptation logic operable to determine a sub-band of a shared region of radio communication spectrum common to said small cell base station and said macro cell base station which said macro cell user equipment is using for communication with said macro cell base station and adapt said operational radio communication parameters of said small cell base station to move communications between said small cell base station and small cell user equipment away from said sub-band of said shared region of radio communication spectrum common to said small cell base station and said macro cell base station to a further sub-band of said shared region of radio communication spectrum common to said small cell base station and said macro cell base station.

## Patentansprüche

1. Verfahren zum Anpassen von betriebsbedingten Radiokommunikationsparametern einer Station auf Basis kleiner Zellen (30, 320a, 320b), betrieben zur Unterstützung einer kleinen Zelle (32, 321 a, 321 b), die einen Abdeckungsbereich (22, 311) überlappt, der von einer Station auf Basis von Makrozellen (24, 310) unterstützt wird, wobei besagtes Verfahren umfasst:
Empfangen einer Eingangsanzeige in besagte kleine Zelle des Makrozellen-Benutzerendgeräts, das mit besagter Station auf Basis von Makrozellen kommuniziert,
mittels Erkennen einer Zunahme der Interferenz in einem Teilband eines gemeinsamen Funkkommunikationsspektrums, wobei besagte erkannte Zunahme vorbestimmte Schwellenwertkriterien erfüllt, die bezeichnend sind für den Eingang eines Makrozellen-Benutzerendgeräts in besagte kleine Zelle; und falls dies der Fall ist,
Anpassen besagter betriebsbedingter Funkkommunikationsparameter besagter Station auf Basis kleiner Zellen, damit Kommunikationen zwischen besagter Station auf Basis kleiner Zellen und dem Benutzerendgerät mit kleinen Zellen wegbewegt werden von einem Teilband eines gemeinsamen Bereichs eines Funkkommunikationsspektrums, das besagter Station auf Basis kleiner Zellen und besagter Station auf Basis von Makrozellen gemeinsam ist;
wobei besagte Anpassung umfasst:
Bestimmen besagten Teilbands von besagtem gemeinsamen Bereich des Funkkommunikationsspektrums, das besagter Station auf Basis kleiner Zellen und besagter Station auf Basis von Makrozellen, welche besagtes Makrozellen-Benutzerendgerät verwendet für die Kommunikation mit besagter Station auf Basis von Makrozellen, gemeinsam ist, und Bewegen aller Kommunikationen zwischen besagter Station auf Basis kleiner Zellen und dem Benutzerendgerät mit kleinen Zellen weg von besagtem bestimmten Teilband zu einem weiteren Teilband von besagtem gemeinsamen Bereich eines Funkkommunikationsspektrums, das besagter Station auf Basis kleiner Zellen und besagter Station auf Basis von Makrozellen gemeinsam ist.

2. Verfahren nach einem beliebigen der vorhergehenden Ansprüche, wobei besagte Anpassung umfasst: Löschen eines Teilbands eines gemeinsamen Bereichs eines Funkkommunikationsspektrums, das besagter Station auf Basis kleiner Zellen und besagter Station auf Basis von Makrozellen gemeinsam ist, von Kommunikationen zwischen besagter Station auf Basis kleiner Zellen und dem Benutzerendgerät mit kleinen Zellen.

3. Verfahren nach einem beliebigen der vorhergehenden Ansprüche, wobei besagte Anpassung umfasst, das Bestimmen, ob besagtes weiteres Teilband momentan frei ist und ob keine Übertragung eines Benutzerendgeräts mit kleinen Zellen auf eine benachbarte kleine Zelle initiiert wird.

4. Verfahren nach einem beliebigen der vorhergehenden Ansprüche, weiterhin umfassend: Überwachen der Interferenz, die in besagtem gemeinsamen Bereich eines Funkkommunikationsspektrums festgestellt worden ist, das besagter Station auf Basis kleiner Zellen und besagter Station auf Basis von Makrozellen gemeinsam ist, und Bewerten, ob besagte überwachte Interferenz die vorbestimmten Schwellenwertkriterien erfüllt, die bezeichnend sind für Kommunikationen des Makrozellen-Benutzerendgeräts mit besagter Station auf Basis von Makrozellen, die in einem oder mehreren Teilbändern besagten gemeinsamen Bereichs des Funkkommunikationsspektrums auftreten.

5. Verfahren nach Anspruch 4, wobei besagtes Überwachen umfasst: direkte Messung der Interferenz, die von besagter Station auf Basis kleiner Zellen in besagtem gemeinsamen Bereich des Funkkommunikationsspektrums festgestellt wird.

6. Verfahren nach Anspruch 4 oder 5, wobei das besagte Überwachen umfasst:
Überwachen der erhaltenen Berichte über den Funkzustand, der von dem Benutzerendgerät mit kleinen Zellen festgestellt worden ist, das in besagter kleiner Zelle betrieben wird.

7. Verfahren nach einem beliebigen der vorhergehenden Ansprüche, wobei besagtes Anpassen umfasst, das Bewegen von Kommunikationen niedriger Priorität zwischen besagter Station auf Basis kleiner Zellen und einem Benutzerendgerät mit kleinen Zellen zu einem Teilband eines gemeinsamen Bereichs eines Funkkommunikationsspektrums, das besagter Station auf Basis kleiner Zellen und besagter Station auf Basis von Makrozellen gemeinsam ist, von Kommunikationen zwischen besagter Station auf Basis kleiner Zellen und dem Benutzerendgerät mit kleinen Zellen.

8. Verfahren nach einem beliebigen der vorhergehenden Ansprüche, wobei besagtes Anpassen umfasst, Anordnen des Benutzerendgeräts mit kleinen Zellen zum Bewegen der Uplink-Kommunikationen zu besagter Station auf Basis kleiner Zellen weg von einem Teilband eines gemeinsamen Bereichs eines Funkkommunikationsspektrums, das besagter Station auf Basis kleiner Zellen und besagter Station auf Basis von Makrozellen gemeinsam ist.

9. Verfahren nach einem beliebigen der vorhergehenden Ansprüche, wobei das besagte Anpassen umfasst, das Bewegen der Downlink-Übertragungen zum Benutzerendgerät mit kleinen Zellen weg von einem Teilband eines gemeinsamen Bereichs eines Funkkommunikationsspektrums, das besagter Station auf Basis kleiner Zellen und besagter Station auf Basis von Makrozellen gemeinsam ist.

10. Computerprogramm-Produkt, betreibbar für das Durchführen des Verfahrens eines beliebigen der Ansprüche 1 bis 9, wenn es auf einem Computer ausgeführt wird.

11. Station auf Basis kleiner Zellen, betreibbar zum Anpassen betriebsbedingter Funkkommunikationsparameter, wobei besagte Station auf Basis kleiner Zellen betreibbar ist zum Unterstützen einer kleinen Zelle, die mit einem Abdeckungsbereich überlappt, der von einer Station auf Basis von Makrozellen unterstützt wird, wobei besagte Station auf Basis kleiner Zellen umfasst:
eine Empfangslogik, die betreibbar ist zum Empfangen einer Eingangsanzeige in besagte kleine Zelle eines Makrozellen-Benutzerendgeräts, das mit besagter Station auf Basis von Makrozellen kommuniziert, mittels Erkennen einer Zunahme der Interferenz in einem Teilband eines gemeinsamen Funkkommunikationsspektrums, wobei besagte erkannte Zunahme vorbestimmte Schwellenwertkriterien erfüllt, die bezeichnend sind für den Eingang eines Makrozellen-Benutzerendgeräts in besagte kleine Zelle; und
eine Anpassungslogik, die betreibbar ist zum Bestimmen eines Teilbands eines gemeinsamen Bereichs eines Funkkommunikationsspektrums, das besagter Station auf Basis kleiner Zellen und besagter Station auf Basis von Makrozellen, welche besagtes Makrozellen-Benutzerendgerät verwendet für die Kommunikation mit besagter Station auf Basis von Makrozellen, gemeinsam ist, und Anpassen besagter betriebsbedingter Funkkommunikationsparameter von besagter Station auf Basis kleiner Zellen zum Bewegen von Kommunikationen zwischen besagter Station auf Basis kleiner Zellen und dem Benutzerendgerät mit kleinen Zellen weg von besagtem bestimmten Teilband besagten gemeinsamen Bereichs eines Funkkommunikationsspektrums, das besagter Station auf Basis kleiner Zellen und besagter Station auf Basis von Makrozellen gemeinsam ist, zu einem weiteren Teilband von besagtem gemeinsamen Bereich eines Funkkommunikationsspektrums, das besagter Station auf Basis kleiner Zellen und besagter Station auf Basis von Makrozellen gemeinsam ist.

## Revendications

1. Procédé d'adaptation des paramètres opérationnels de communication radio d'une station de base de petite cellule (30, 320a, 320b) fonctionnant de façon à prendre en charge une petite cellule (32, 321 a, 321 b) qui chevauche une zone de couverture (22, 311) prise en charge par une station de base de macro cellule (24, 310), ledit procédé comprenant les étapes suivantes :
recevoir une indication d'entrée dans ladite petite cellule d'un équipement utilisateur de macro cellule communiquant avec ladite station de base de macro cellule en détectant une augmentation des interférences dans une sous-bande d'un spectre de communication radio commun, ladite augmentation détectée respectant des critères de seuil prédéterminés indiquant l'entrée d'un équipement utilisateur de macro cellule dans ladite petite cellule ; et, si c'est le cas,
adapter lesdits paramètres opérationnels de communication radio de ladite station de base de petite cellule pour éloigner les communications entre ladite station de base de petite cellule et l'équipement utilisateur de petite cellule d'une sous-bande d'une zone partagée du spectre de communication radio commun à ladite station de base de petite cellule et ladite station de base de macro cellule ;
dans lequel ladite adaptation comprend les étapes suivantes :
déterminer ladite sous-bande de ladite zone partagée du spectre de communication radio commun à ladite station de base de petite cellule et ladite station de base de macro cellule que ledit équipement utilisateur de macro cellule utilise pour la communication avec ladite station de base de macro cellule et déplacer toutes les communications entre ladite station de base de petite cellule et l'équipement utilisateur de petite cellule de ladite sous-bande déterminée vers une autre sous-bande de ladite zone partagée du spectre de communication radio commun à ladite station de base de petite cellule et ladite station de base de macro cellule.

2. Procédé selon l'une quelconque des revendications précédentes, dans lequel ladite adaptation comprend l'étape suivante : libérer une sous-bande d'une zone partagée du spectre de communication radio commun à ladite station de base de petite cellule et ladite station de base de macro cellule des communications entre ladite station de base de petite cellule et l'équipement utilisateur de petite cellule.

3. Procédé selon l'une quelconque des revendications précédentes, dans lequel ladite adaptation comprend la détermination du fait que ladite autre sous-bande est actuellement libre et, si ce n'est pas le cas, l'initialisation du transfert de l'équipement utilisateur de petite cellule vers une petite cellule adjacente.

4. Procédé selon l'une quelconque des revendications précédentes comprenant en outre les étapes suivantes : surveiller les interférences rencontrées dans ladite zone partagée du spectre de communication radio commun à ladite station de base de petite cellule et ladite station de base de macro cellule et évaluer si lesdites interférences surveillées respectent les critères de seuil prédéterminés indiquant que des communications d'équipement utilisateur de macro cellule avec ladite station de base de macro cellule se produisent sur une ou plusieurs sous-bandes de ladite zone partagée du spectre de communication radio.

5. Procédé selon la revendication 4, dans lequel ladite surveillance comprend l'étape suivante : mesurer directement les interférences rencontrées par ladite station de base de petite cellule dans ledit spectre de communication radio commun partagé.

6. Procédé selon la revendication 4 ou la revendication 5, dans lequel ladite surveillance comprend l'étape suivante : surveiller les rapports reçus sur les conditions radio rencontrées de l'équipement utilisateur de petite cellule fonctionnant dans ladite petite cellule.

7. Procédé selon l'une quelconque des revendications précédentes, dans lequel ladite adaptation comprend le déplacement des communications de priorité basse entre ladite station de base de petite cellule et l'équipement utilisateur de petite cellule vers une sous-bande d'une zone partagée du spectre de communication radio commun à ladite station de base de petite cellule et ladite station de base de macro cellule des communications entre ladite station de base de petite cellule et l'équipement utilisateur de petite cellule.

8. Procédé selon l'une quelconque des revendications précédentes, dans lequel ladite adaptation comprend l'étape consistant à commander à l'équipement utilisateur de petite cellule d'éloigner les communications sur liaison montante vers ladite station de base de petite cellule d'une sous-bande d'une zone partagée du spectre de communication radio commun à ladite station de base de petite cellule et ladite station de base de macro cellule.

9. Procédé selon l'une quelconque des revendications précédentes, dans lequel ladite adaptation comprend l'éloignement des transmissions sur liaison descendante vers l'équipement utilisateur de petite cellule d'une sous-bande d'une zone partagée du spectre de communication radio commun à ladite station de base de petite cellule et ladite station de base de macro cellule.

10. Produit-programme informatique permettant, lorsqu'il est exécuté sur un ordinateur, de réaliser le procédé selon l'une quelconque des revendications 1 à 9.

11. Station de base de petite cellule permettant d'adapter les paramètres opérationnels de communication radio, ladite station de base de petite cellule permettant de prendre en charge une petite cellule qui chevauche une zone de couverture prise en charge par une station de base de macro cellule, ladite station de base de petite cellule comprenant :
une logique de réception permettant de recevoir une indication d'entrée dans ladite petite cellule d'un équipement utilisateur de macro cellule communiquant avec ladite station de base de macro cellule en détectant une augmentation des interférences dans une sous-bande d'un spectre de communication radio commun, ladite augmentation détectée respectant des critères de seuil prédéterminés indiquant l'entrée d'un équipement utilisateur de macro cellule dans ladite petite cellule ; et
une logique d'adaptation permettant de déterminer une sous-bande d'une zone partagée du spectre de communication radio commun à ladite station de base de petite cellule et ladite station de base de macro cellule que ledit équipement utilisateur de macro cellule utilise pour la communication avec ladite station de base de macro cellule, et d'adapter lesdits paramètres opérationnels de communication radio de ladite station de base de petite cellule pour déplacer les communications entre ladite station de base de petite cellule et l'équipement utilisateur de petite cellule de ladite sous-bande de ladite zone partagée du spectre de communication radio commun à ladite station de base de petite cellule et ladite station de base de macro cellule, vers une autre sous-bande de ladite zone partagée du spectre de communication radio commun à ladite station de base de petite cellule et ladite station de base de macro cellule.
